# EUROPÄISCHE PATENTSCHRIFT

(11) **EP 3 339 817 B1**
(45) Veröffentlichungstag und Bekanntmachung des Hinweises auf die Patenterteilung: **01.06.2022**
(21) Anmeldenummer: 16206342.4
(22) Anmeldetag: 22.12.2016
(51) Int. Cl.: G01F 13/00

(54) **DOSIEREINRICHTUNG FÜR PULVERFÖRMIGE SUBSTANZEN**
METERING DEVICE FOR POWDERY SUBSTANCES
DISPOSITIF DE DOSAGE POUR SUBSTANCES EN POUDRE

(43) Veröffentlichungstag der Anmeldung: 27.06.2018
(73) Patentinhaber: Mettler-Toledo GmbH, 8606 Greifensee (CH)
(72) Erfinder: Ehrbar, Sandra, 8604 Volketswil (CH)
(74) Vertreter: Mettler-Toledo

(56) Entgegenhaltungen:
- EP-A1- 1 931 952
- WO-A1-2015/173749
- GB-A- 1 258 931
- US-A- 4 084 726

## Beschreibung

### Technisches Gebiet

Die Erfindung betrifft eine Dosiereinrichtung für pulver- oder pastenförmige Substanzen, welche einen mit einem Quell- oder Entnahmegefäss verbindbaren oder mit diesem verbundenen Dosierkopf aufweist.

### Stand der Technik

Dosiereinrichtungen finden insbesondere beim Dosieren kleiner Mengen, beispielsweise toxischer Substanzen, mit hoher Präzision in kleine Zielgefässe Verwendung. Häufig sind solche Zielgefässe auf einer Waage platziert, um die Menge der aus der Dosiereinrichtung ausgetragenen Substanz zu verwiegen, so dass sie anschliessend bestimmungsgemäss weiterverarbeitet werden kann.

Die zu dosierende Substanz befindet sich beispielsweise in einem Entnahmegefäss, welches mit dem Dosierkopf in Verbindung steht und für das Dosieren mit diesem eine Einheit - die Dosiereinrichtung - bildet. Dabei ist es wünschenswert, die zu dosierende Substanz durch eine kleine Öffnung der Dosiereinrichtung auszutragen, so dass sie auch gezielt in ein Gefäss mit einem kleinen Öffnungsquerschnitt abgefüllt werden kann.

Dosiereinrichtungen für trockenes und/oder pulverförmiges Schüttgut, beispielsweise Farbstoffpulver sind bekannt und im Einsatz. So wird in der US 5,145,009 A eine Vorrichtung zum Dosieren beschrieben, die aus einem Ausgabebehälter mit einem verschliessbaren Auslass an seiner Unterseite besteht. Als Verschluss dient ein kegelförmiger, sich nach oben verjüngender zum Öffnen einer Austrittöffnung vertikal nach unten verstellbarer Ventilkörper, der in seiner Offenstellung rotiert und Mittel zum Fördern des Gutes in Richtung der Auslassöffnung besitzt.

Die oben beschriebene Einrichtung eignet sich weniger gut für das Dosieren von Schüttgut in Gefässe mit einem kleinen Öffnungsquerschnitt. Die sich nach oben verjüngende Struktur des Ventilkörpers sowie dessen Rotation ergeben eine Radial- bzw. Horizontalkomponente der Schüttgutpartikel am Auslass und verursachen demzufolge eine Streuung, die selbst über einen relativ breiten Öffnungsquerschnitt eines abzufüllenden Gefässes hinausreichen kann.

Aus GB 1 258 931 ist ebenfalls eine Dosiereinrichtung bekannt zum Dosieren von vordefinierten Materialvolumen mit einem Auslassabschnitt, welcher ein festes Volumen definiert. Das Volumen des Auslassabschnitts wird definiert durch zwei Elemente, wobei deren Anordnung derart ist, dass bei geschlossener Eintrittsöffnung die Austrittsöffnung offen ist und umgekehrt.

Ein mit Finger gehaltener und betriebener handgrosser Saatgutspender ist bekannt aus US 4,084,726 A und hat einen Saatgutbehälter mit einem offenen Ende, durch das der Behälter die zu dosierenden Samen aufnehmen kann, wobei das offene Ende durch einen abnehmbaren Auslauf verschlossen ist, durch den die Samen hindurchtreten können. Ein Samenausgabestab erstreckt sich durch den Behälter und den Auslauf und über das eingeschlossene Ende hinaus und hat ein Fingerstück, wobei der Stab einen zylindrischen Abschnitt aufweist, der normalerweise das offene Ende des Auslaufs gegen das Entweichen der Samen schließt, bis der Stab fingerbetätigt wird. Der Stab hat eine Längsnut für den Durchgang der Samen und eine Querrille, um den Eintritt der Samen in die Längsnut zu erleichtern.

Ein Verfahren und eine Vorrichtung zum Austragen einer pulver- oder pastenförmigen Kleinstmengenprobe, beispielsweise für die Atomabsorptionsspektroskopie, offenbart die US 4,905,525 A. In einem Vorratsbehälter mit einer Auslassöffnung am Ende eines Formkanals ragt von oben her ein Stempel in das im Behälter befindliche Probenmaterial. Eine kleine Probenmenge wird durch den Formkanal gepresst und aus der Auslassöffnung ausgetragen, indem der Stempel in das Probenmaterial gedrückt wird, so dass es sich oberhalb des Formkanals verdichtet. In einer speziellen Ausführungsform ist der Behälter zur Auslassöffnung hin trichterförmig ausgebildet und der Stempel ist schräg zur Auslassöffnung angeordnet.

In der DE 198 41 478 A1 ist eine Dosiereinrichtung zum Abfüllen von viskosen, pastösen, pulverförmigen oder granulatförmigen Produkten beschrieben, mit einem Dosierbehälter, der für den Betrieb positionierten Dosiereinrichtung sich zu seinem unteren Ende hin verjüngt und eine dort angeordnete Austrittsöffnung aufweist. An einer zentral angeordneten rotierbar ausgestalteten Hohlwelle sind Abstreifwerkzeuge befestigt. Die Dosiereinrichtung verfügt über ein Dosierventil, das eine in der Hohlwelle angeordnete und translatorisch auf und ab bewegbare Ventilstange aufweist, an deren unterem Ende ein kegelförmig sich nach oben verjüngender Ventilkopf angeordnet ist, so dass die Austrittsmenge des Abfüllguts geregelt und die Austrittsöffnung von oben her geschlossen werden kann. In einigen der beschriebenen Ausführungsformen ist auch das Dosierventil rotierbar ausgebildet.

Bei einer Dosiereinrichtung gemäss der DE 198 41 478 A1 oder gemäss der US 5,145,009 A kann die aus dem Behälter auszutragende Menge nicht beliebig klein gehalten werden. Da die Austrittsöffnung ringförmig ist, ist die minimal zum Dosieren verwendbare Breite des Ringspaltes auf mindestens die Ausdehnung einer kleinsten Schüttguteinheit - beispielsweise eines Pulverkorns - begrenzt, wodurch gleichzeitig mehrere Schüttguteinheiten aus dem Ringspalt austreten können. Ferner besteht die Gefahr, dass je nach Beschaffenheit des Schüttgutes ein Teil des Spalts verstopft werden kann. Dies kann insbesondere dann erfolgen, wenn gegen Ende Dosiervorgangs durch Reduktion der Breite des Ringspalts die Austragungsrate reduziert werden soll, da dabei dessen Breite im Verhältnis zu dessen Länge beziehungsweise Umfang stetig ungünstiger wird.

In der EP 1 931 950 B1 ist eine Dosiereinrichtung mit einem Austragungs- und Verschlusselement gezeigt, welche die oben erwähnten Nachteile überwindet und eine gezielte Dosierung von Kleinstmengen von pulver- oder pastenförmigen Substanzen in ein Gefäss ermöglicht. Die EP 1 931 952 B1 schlägt zusätzlich ein Zufuhrwerkzeug vor, das relativ zum Austragungs- und Verschlusselement entlang dessen Mittellängsachse translatorisch bewegbar gelagert und geführt ist, wodurch es sich im Betriebszustand der Dosiereinrichtung stets in losem Kontakt mit der die Austrittsöffnung umgebenden Kante des Gehäuses befindet. Damit soll gewährleistet werden, dass auch bei kleinster Durchtrittsöffnung immer genügend zu dosierende Substanz derselben zugeführt wird. Daher soll es im Zusammenwirken von Zufuhrwerkzeug und Austragungs- und Verschlusselement möglich sein, stark koagulierende Pulver sowie Pulver mit geladenen Partikeln oder Pasten zu dosieren, indem diese Substanzen aufgelockert, der Durchtrittsöffnung kontrolliert zugeführt und vom Rand der Austrittsöffnung abgestreift werden.

Eine Dosiereinrichtung mit einem Austragungs- und Verschlusselements gemäss der EP 1 931 950 B1 und EP 1 931 952 B1 erwiesen sich als nachteilig wenn es darum geht grössere Füllmengen mit gleichbleibender Genauigkeit zu dosieren, da die Austrittsmenge pro Zeit durch den Querschnitt des Austragungs- und Verschlusselements beschränkt ist. Eine ledigliche Vergrösserung des Querschnitts des Austragungs- und Verschlusselements kann dazu führen, dass die pulver- oder pastenförmige Substanz nicht ausreichend nachgeführt wird, was die Stetigkeit der Befüllung beeinflusst, oder dass die Genauigkeitstoleranz der abzufüllenden Zielmenge nicht erreicht wird.

Aufgabe der Erfindung ist es daher, ein Austragungs- und Verschlusselement zur Verfügung zu stellen, mit welcher grössere Mengen von pulver- oder pastenförmigen Substanzen gezielt und unter Einhaltung der Genauigkeitstoleranz der abzufüllenden Zielmenge schneller in ein Gefäss eingefüllt werden können. Eine weitere Aufgabe besteht darin stark koagulierende Substanzen oder Pasten mit der Dosiereinrichtung austragen zu können.

Die Aufgabe wird gelöst durch eine Dosiereinrichtung für pulver- oder pastenförmige Substanzen mit einem Entnahmegefäss und einem damit verbundenem oder verbindbaren Dosierkopf, der ein Gehäuse mit einer mit einem kreisförmigen Querschnitt versehenen Austrittsöffnung und ein Austragungs- und Verschlusselement aufweist. Die Austrittsöffnung und das Austragungs- und Verschlusselement sind dabei auf einer Mittellängsachse des Dosierkopfs angeordnet sind, wobei das Austragungsund Verschlusselement relativ zum Gehäuse um die Mittellängsachse des Dosierkopfs rotierbar und entlang der Mittellängsachse des Dosierkopfs bezüglich des Gehäuses translatorisch verschiebbar ausgestaltet ist. Dabei ist das Austragungs- und Verschlusselement in seiner Grundform zylinderförmig ausgebildet, weist ein dem Verschliessen der Austrittsöffnung dienenden Verschlussbereich, einen dem Verschlussbereich benachbart angeordneten der Austragung von zu dosierender Substanz dienenden und eine zylindrische Mantelfläche bildenden Austragungsbereich, und einen dem Austragungsbereich benachbart angeordneten Schaftbereich auf. Der Verschlussbereich ist dabei im betriebsbereiten Zustand unterhalb des Austragungsbereichs angeordnet und bildet am unteren Ende des Austragungs- und Verschlusselements eine Stirnfläche. Der Austragungsbereich ist mit einer vom Mantel der zylinderförmigen Grundform des Austragungs- und Verschlusselements ausgehenden Ausnehmung versehen.

Erfindungsgemäss weist das Austragungs- und Verschlusselement weiter einen an die zylinderförmige Mantelfläche des Austragungsbereichs angeformten und der Zuleitung der Substanz zur Austrittsöffnung dienenden Zufuhrkörper auf, und erstreckt sich die Ausnehmung über den Austragungsbereich und den angeformten Zufuhrkörper, und bildet dabei eine stetig verlaufende Austragungsfläche.

Der direkt an den Austragungsbereich angeformte Zufuhrkörper, der mit der Ausnehmung eine stetig verlaufende Austragungsfläche bildet, verbessert die Austragung von grösseren Mengen von pulver- oder pastenförmigen Substanzen durch eine unterbrechungsfreie Beförderung mit minimalem Widerstand für die Substanz vom Entnahmegefäss, durch den Dosierkopf, in ein darunterliegendes Gefäss. Dabei ist es möglich gezielt und unter Einhaltung der bisherigen Genauigkeitstoleranz der abzufüllenden Zielmenge schneller in ein Gefäss einzufüllen.

Erfindungsgemäss bildet die Austragungsfläche ein Teil einer Mantelfläche einer Ausnehmung mit einer zylindrischen Grundform, wobei die Mittellängsachse dieser zylindrischen Grundform die Austragungsrichtung des Austragungs- und Verschlusselements definiert in welcher die pulver- oder pastenförmige Substanzen das Austragungs- und Verschlusselement im Betrieb bei Austragung verlässt. Der Zufuhrkörper ist dabei von der Mittellängsachse des Austragungs- und Verschlusselements in Richtung der Austragungsrichtung angeordnet, oder der Zufuhrkörper ist von der Mittellängsachse des Austragungs- und Verschlusselements in umgekehrter Weiterführung der Austragungsrichtung angeordnet.

Vorteilhafterweise schliesst die Austragungsrichtung und die vom Verschlusselement gebildete Stirnfläche des Austragungs- und Verschlusselements einen spitzen Winkel α von > 0° bis 45° ein. Eine nochmals verbesserte Austragung ergibt sich, wenn der spitze Winkel α in einem Bereich zwischen 15° und 25° liegt.

Vorteilhafterweise ist die Austragungsfläche konkav gekrümmt ausgeformt. Weiter kann die Austragungsfläche vorteilhafterweise auch in zwei Richtungen konkav gekrümmt ausgeformt sein, wobei in der zweiten Richtung eine zweite Ausnehmung ein Teil einer Mantelfläche einer zweiten zylindrischen Grundform bildet, und wobei die Mittellängsachse dieser zweiten zylindrischen Grundform einen stumpfen Winkel β mit der Mittellängsachse des Austragungs- und Verschlusselements einschliesst. Der stumpfe Winkel β kann in einem Bereich zwischen 90° und 135° liegen. Die konkave Krümmung der Austragungsfläche 104 in zwei Richtungen verbessert die Austragung von grösseren Mengen an pulver- oder pastenförmigen Substanzen nochmals signifikant.

Ein Zylinder ist ein Körper, der von einer Zylinderfläche (Mantelfläche) mit geschlossener Leitkurve und zwei parallelen Ebenen, den Grundflächen des Zylinders, begrenzt wird. Die Ausnehmungen am Austragungs- und Verschlusselement haben wie oben erwähnt eine zylindrische Grundform. Dort wo sich diese Grundformen mit dem Austragungsbereich überschneiden ist das Material des Austragungs- und Verschlusselements entfernt. Durch die beiden Winkel α und β sind die zylindrischen Grundformen relativ zum Austragungs- und Verschlusselement definiert.

In einer weiteren Ausgestaltung ist der integrierte Zufuhrkörper im eingebauten Zustand in einem Dosierkopf in Beförderungsrichtung der pulver- oder pastenförmigen Substanz vor der Austrittsöffnung eines Trichterelements des Dosierkopfs angeordnet.

Für eine verbesserte Austragung weist der integrierte Zufuhrkörper eine Randkontur auf, die der Innenkontur des Trichterelements folgt. Weiter kann, wenn im Betriebszustand der Dosiereinrichtung das Austragungs- und Verschlusselement vollständig ausgefahrenen ist, der integrierte Zufuhrkörper entlang seiner Mantelkontur im Wesentlichen stets in losem Kontakt mit der Innenkontur des Trichterelements sein, oder der integrierte Zufuhrkörper ist im Betriebszustand der Dosiereinrichtung bei vollständig ausgefahrenem Austragungs- und Verschlusselement entlang seiner Mantelkontur mit einem dazwischenliegenden Spalt von der Innenkontur des Trichterelements beabstandet. Diese jeweils eine der obengenannten Varianten hat je nach auszutragender Substanz (viskos, pastös, pulverförmig oder granulatförmig) einen Vorteil gegenüber der anderen Variante bezüglich der Verbesserung der Austragung von grösseren Mengen an Substanz.

In einer Weiterbildung ist die Innenkontur des Trichterelements trichterförmig mit zylindrischem Zwischenabschnitt ausgebildet. Dadurch wird der Nachschub an auszutragender Substanz verbessert.

In einer weiteren Weiterbildung weist der Schaftbereich einen kleineren Durchmesser als der Austragungsbereich auf, und der Austragungsbereich weist einen kleineren Durchmesser als das Verschlusselement auf.

Vorteilhafterweise ist der angeformte Zufuhrkörper als Schaber ausgebildet. Durch die Rotation des Austragungs- und Verschlusselements befördert der Zufuhrkörper die auszutragende Substanz zur Austrittsöffnung und verbessert dadurch die schnellere Austragung grösserer Mengen der auszutragenden Substanz.

### Kurzbeschreibung der Erfindung

Im Folgenden wird der Erfindungsgegenstand anhand von bevorzugten Ausführungsbeispielen, welche in den beiliegenden Zeichnungen dargestellt sind erläutert. Es zeigen:
- Fig. 1: einen Dosierkopf nach Stand der Technik, mit Zufuhrwerkzeug;
- Fig. 2a: das Austragungs- und Verschlusselement nach Stand der Technik aus der Figur 1 seitlich mit Blick auf die Austragungsfläche;
- Fig. 2b: das Austragungs- und Verschlusselement nach Stand der Technik aus Figur 2a, gegenüber der dortigen Darstellung um 90° gedreht;
- Fig. 2c: das Austragungs- und Verschlusselement nach Stand der Technik aus Figur 2a in einer dreidimensionalen Darstellung;
- Fig. 2d: das Austragungs- und Verschlusselement nach Stand der Technik aus Figur 2a in einer weiteren dreidimensionalen Darstellung;
- Fig. 3a: ein Austragungs- und Verschlusselement gemäss der Erfindung, seitlich mit Blick auf die Austragungsfläche;
- Fig. 3b: das Austragungs- und Verschlusselement aus Figur 3a, gegenüber der dortigen Darstellung um -90° gedreht;
- Fig. 3c: das Austragungs- und Verschlusselement aus Figur 3a, gegenüber der dortigen Darstellung um 90° gedreht;
- Fig. 4a: das Austragungs- und Verschlusselement aus Figur 3a relativ zu einem Trichterelement des Dosierkopfs in der verschlossenen Betriebsstellung;
- Fig. 4b: das Austragungs- und Verschlusselement aus Figur 3a relativ zu einem Trichterelement des Dosierkopfs in der vollständig offenen Betriebsstellung;

### Kurze Beschreibung der Zeichnungsfiguren

Merkmale mit gleicher Funktion und ähnlicher Ausgestaltung sind in der folgenden Beschreibung mit denselben Bezugszeichen versehen.

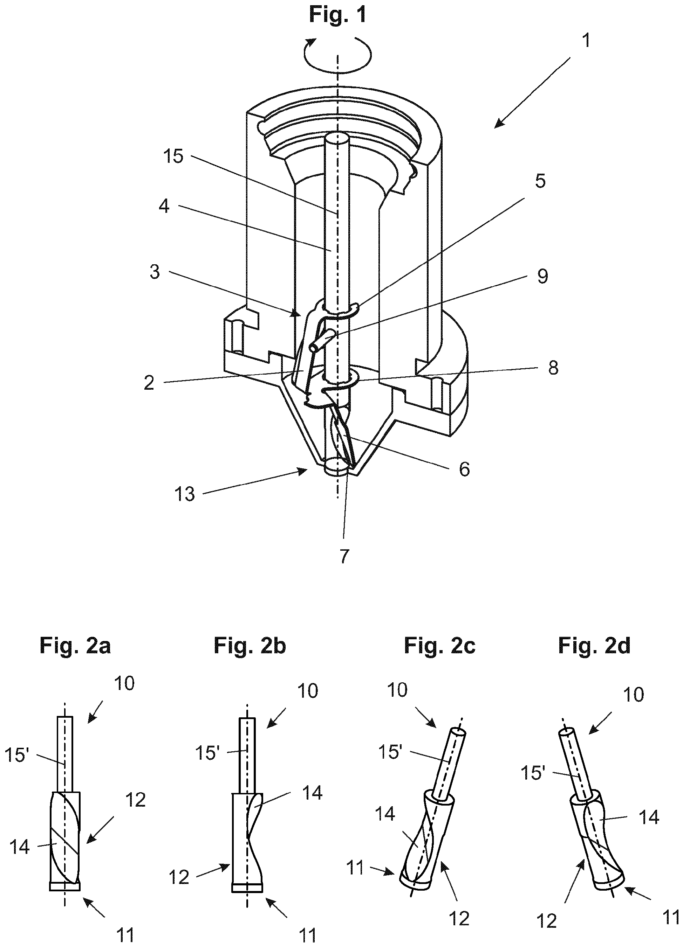

Für den Fall des Dosierens von pulverförmigen Substanzen, die eine schlechte Rieselfähigkeit besitzen, also beispielsweise pappige Pulver, oder für das Dosieren pastenförmiger Substanzen, ist es von erheblichem Vorteil, wenn von einem Zufuhrwerkzeug 3 Gebrauch gemacht wird. In einer in Figur 1 dargestellten Ausführung des Standes der Technik ist ein Zufuhrwerkzeug 3 innerhalb des Dosierkopfs 1 angeordnet. Dieses weist eine Haltevorrichtung auf, mit welcher es die Stange 4 an zwei übereinander angeordneten Positionen ringförmig umgreift, wodurch das Zufuhrwerkzeug 3 mit der Stange 4 lose verbunden ist. Ferner besitzt das Zufuhrwerkzeug 3 einen Rührteil 2 und ein rakel- oder schaufelförmig ausgebildetes Zufuhrelement 6. Ein oberer Haltering 5 der Haltevorrichtung des Zufuhrwerkzeugs 3 ist oberhalb eines mit der Stange 4 fest verbundenen Querbolzens 9 angeordnet, ein unterer Haltering 8 unterhalb des Querbolzens 9. Damit ist das Zufuhrwerkzeug 3 in der Dosiervorrichtung geführt. Beim translatorischen Verschieben der Stange 4 entlang der Mittellängsachse 15, wenn die Austrittsöffnung 7 geöffnet oder geschlossen werden soll, ist durch die lose Verbindung des Zufuhrwerkzeugs 3 mit der Stange 4 gewährleistet (hier vermittels Wirkung der Schwerkraft), dass das Zufuhrwerkzeug 3 stets in losem Kontakt mit dem Rand 13 der Austrittsöffnung 7 bleibt. Ausserdem bewirkt ein bei Rotation der Stange 4 entstehender Kontakt des Querbolzens 9 mit dem Rührteil 2, dass sich das Zufuhrwerkzeug 3 mitdreht.

In den Figuren 2a bis 2d ist die Ausgestaltung eines Austragungs- und Verschlusselements 10, wie sie bereits im Stand der Technik beschrieben wurde, in verschiedenen Ansichten zu sehen: in Figur 2a seitlich mit Blick auf die Austragungsfläche 14, in Figur 2b gegenüber der Darstellung von Figur 2a um -90° gedreht, in Figur 2c und in Figur 2d in einer dreidimensionalen Darstellung. Die Aussparung im Austragungsbereich 12 ist von einer konkaven Austragungsfläche 14 begrenzt, deren Ränder nicht parallel zur orthogonal zur Mittellängsachse ausgerichteten Ebene ausgerichtet sind, sondern mit dieser einen beliebigen Winkel einschliessen. Eine solche Aussparung lässt sich vermittels eines zylindrischen Ausnehmung unter einem von 90° verschiedenen Winkel zur Mittellängsachse herstellen.

Aus den Figuren 2a bis 2d geht ausserdem hervor, dass der Durchmesser am Austragungsbereich 12 etwas geringer ist als am Verschlussbereich 11. Es versteht sich von selbst, dass die Austrittsöffnung 7 des Dosierkopfs einen dem Verschlussbereich 11 angepassten Durchmesser besitzt, wodurch diese spielfrei verschlossen werden kann, jedoch im geöffneten Zustand genügend Spiel für die Rotation aufweist.

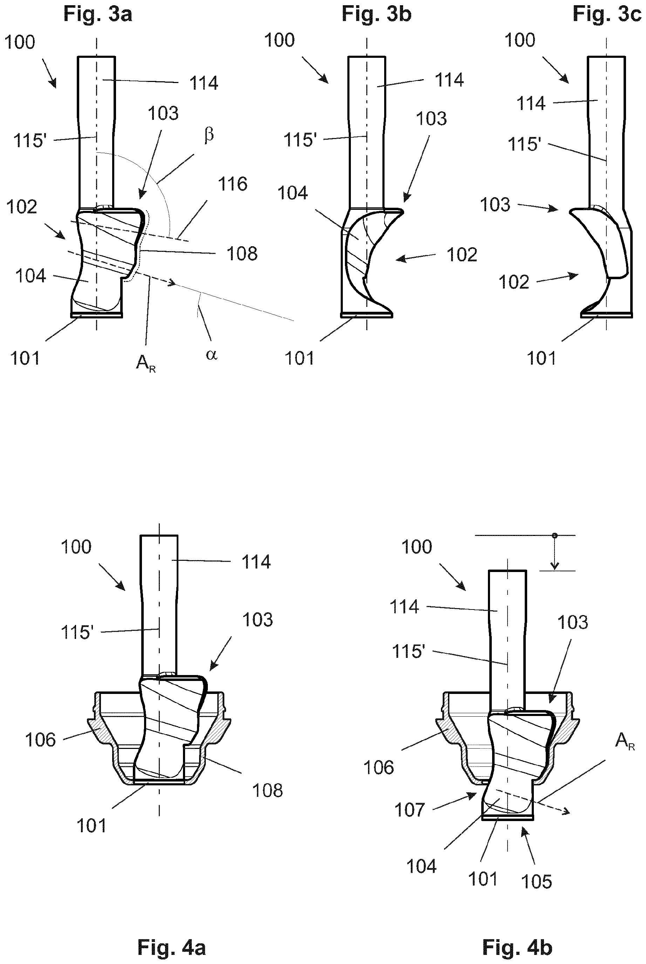

In den Figuren 3a bis 3c ist nun ein erfindungsgemässes Austragungs- und Verschlusselements 100 gezeigt: in Figur 3a seitlich mit Blick auf die Austragungsfläche 104, in Figur 3b gegenüber der Darstellung von Figur 3a um -90° gedreht, und in Figur 3c gegenüber der Darstellung von Figur 3a um 90° gedreht. Wie ein Austragungs- und Verschlusselements 10 des Standes der Technik weist das erfindungsgemässe Austragungs- und Verschlusselement 100 einen Verschlussbereich 101 auf, der im Zusammenspiel mit einem Trichterelement (siehe Figuren 4a und 4b) eine Verschlussöffnung dessen verschliesst. Dem Verschlusselement 101 benachbart ist ein zylinderförmiger Austragungsbereich 102 dessen Durchmesser etwas geringer ist als am Verschlussbereich 101, um wie oben schon erwähnt im geöffneten Zustand genügend Spiel für die Rotation aufzuweisen. Der Austragungsbereich 102 ist geprägt durch eine Aussparung in der Mantelfläche des den Austragungsbereich 102 bildenden Zylinders.

Weiter weist das Austragungs- und Verschlusselement 100 in den Figuren 3a bis 3c ein aus Sicht des Betrachter rechts der Mittellängsachse angeordneter integrierter Zufuhrkörper 103 auf, der an die Mantelfläche des zylindrischen Austragungsbereichs 102 angeformt ist. Der Zufuhrkörper 103 bildet eine mit der Ausnehmung des Austragungsbereichs 102 gemeinsame Oberfläche, die sich vorteilhafterweise als eine stetige Austragungsfläche 104 ausbildet. Die Austragungsfläche 104 bildet den Teil einer Mantelfläche einer Ausnehmung mit einer zylindrischen Grundform, wobei die Mittellängsachse dieser zylindrischen Grundform die Austragungsrichtung A_{R} des Austragungs- und Verschlusselements 100 definiert in welcher die pulver- oder pastenförmige Substanzen das Austragungs- und Verschlusselement 100 im Betrieb bei Austragung verlässt. Die Austragungsrichtung A_{R} der Austragungsfläche 104 ist vorteilhafterweise um einen spitzen Winkel α geneigt, der mit Bezug auf die Stirnfläche 105 des Austragungs- und Verschlusselements 100 definiert wird.

Die in den Figuren 3a bis 3c (und Figuren 4a und 4b) gezeigte Austragungsfläche 104 ist in zwei Richtungen konkav gekrümmt ausgeformt, wobei in der zweiten Richtung die zweite Ausnehmung ein Teil einer Mantelfläche einer zweiten zylindrischen Grundform bildet. Die Mittellängsachse 116 dieser zweiten zylindrischen Grundform schliesst einen stumpfen Winkel β mit der Mittellängsachse 115' des Austragungs- und Verschlusselement 100 (zusammenfallend mit der Mittellängsachse 15 des Dosierkopfs 1) ein. Diese Ausformung mittels zwei Ausnehmungen begünstigt den Durchfluss der zu dosierenden Substanz.

Für eine bessere Darstellung der Ausprägung der Austragungsfläche 104 sind die Übergänge von verschiedenen Flächenbereichen durch dünnere Linien gekennzeichnet. An diesen Linien ändert sich die Krümmung vom einen Flächenbereich zum benachbarten Flächenbereich.

Die seitliche Kontur 108 des in Figur 3a gezeigten Zufuhrkörpers 103 ist entsprechend dem Trichterelement 106 (Siehe Figuren 4a und 4b) ausgeprägt. Diese Kontur kann dementsprechend dem Trichterelement auch eine andere Form aufweisen, wie zum Beispiel eine trichterförmige Form mit keinem oder mindestens einem zylindrischen Zwischenabschnitt 108.

Die weiteren Ansichten des Austragungs- und Verschlusselement 100 in den Figuren 3b und 3c sind um die Mittellängsachse 115' gedrehte Ansichten und erlauben eine bessere Darstellung der Austragungsfläche 104 (Figur 3b) und des Zufuhrkörpers 103 (Figur 3c).

In Figur 4a ist das Austragungs- und Verschlusselements 100 gegenüber dem Trichterelement 106 des Dosierkopfs dargestellt. In dieser gezeigten Position verschliesst das Verschlussbereich 101 die Austrittsöffnung 107 was der geschlossenen Betriebsposition entspricht.

Durch eine translatorische Verschiebung des Austragungs- und Verschlusselements 100 gegenüber dem Trichterelement 106 des Dosierkopfs, wie in Figur 4b durch den Pfeil angedeutet, wird die Verschlussöffnung geöffnet. Wird das Austragungs- und Verschlusselement 100 mit samt dem Zufuhrkörper 103 weiter verschoben so wird der offene Querschnitt in der Austrittsöffnung 107 kontinuierlich vergrössert und die pulveroder pastenförmige Substanz kann in ein darunter stehendes Gefäss dosiert abgefüllt werden.

Mittels einer auf das Austragungs- und Verschlusselements 100 übertragene Rotation, welche mit der translatorischen Bewegung kombiniert werden kann, wird ein kontinuierlicher Fluss der pulver- oder pastenförmige Substanz verbessert, da der Zufuhrkörper 103 die Rieselfähigkeit innerhalb des Trichterelements 106 aufrechterhält.

### Liste der Bezugszeichen

- 1: Dosierkopf
- 2: Rührteil
- 3: Zufuhrwerkzeug
- 4: Stange
- 5: oberer Haltering
- 6: Zufuhrelement
- 7, 107: Austrittsöffnung
- 8: unterer Haltering
- 9: Querbolzen
- 10: Austragungs- und Verschlusselement gemäss Stand der Technik
- 11, 101: Verschlussbereich
- 12, 102: Austragungsbereich
- 13: Rand der Austrittsöffnung 7
- 14, 104: Austragungsfläche
- 15: Mittellängsachse des Dosierkopfs 1
- 15': Mittellängsachse des Austragungs- und Verschlusselements 10
- 100: Austragungs- und Verschlusselement gemäss der Erfindung
- 103: Zufuhrkörper
- 105: Strinfläche des Austragungs- und Verschlusselement 100
- 106: Trichterelement
- 108: Zwischenabschnitt
- 114: Schaftbereich
- 115': Mittellängsachse des Austragungs- und Verschlusselements 100
- 116: Mittellängsachse der zweiten zylindrischen Grundform
- A_{R}: Austragungsrichtung
- α: spitzer Winkel zwischen der Stirnfläche 105 und der Austragungsrichtung A_{R}
- β: stumpfer Winkel zwischen der Mittellängsachse 115' und der Mittellängsachse 116

## Patentansprüche

1. Dosiereinrichtung für pulver- oder pastenförmige Substanzen mit einem Entnahmegefäss und einem damit verbundenem oder verbindbaren Dosierkopf (1), der ein Gehäuse mit einer mit einem kreisförmigen Querschnitt versehenen Austrittsöffnung (7, 107) und ein Austragungs- und Verschlusselement (100) aufweist, wobei die Austrittsöffnung (7, 107) und das Austragungs- und Verschlusselement (100) auf einer Mittellängsachse (15) des Dosierkopfs (1) angeordnet sind, und wobei das Austragungs- und Verschlusselement (100) relativ zum Gehäuse um die Mittellängsachse (15) des Dosierkopfs (1) rotierbar und entlang der Mittellängsachse (15) des Dosierkopfs (1) bezüglich des Gehäuses translatorisch verschiebbar ausgestaltet ist,
wobei das Austragungs- und Verschlusselement (100)
- in seiner Grundform zylinderförmig ausgebildet ist,
- ein dem Verschliessen einer Austrittsöffnung (107) dienenden Verschlussbereich (101),
- einen dem Verschlussbereich (101) benachbart angeordneten der Austragung von zu dosierender Substanz dienenden und eine zylinderförmige Mantelfläche bildenden Austragungsbereich (102), und
- einen dem Austragungsbereich (102) benachbart angeordneten Schaftbereich (114) aufweist, und
wobei der Verschlussbereich (101) im betriebsbereiten Zustand unterhalb des Austragungsbereichs (102) angeordnet ist und am unteren Ende des Austragungs- und Verschlusselements (100) eine Stirnfläche (105) bildet, und
wobei der Austragungsbereich (102) mit einer vom Mantel der zylinderförmigen Grundform des Austragungs- und Verschlusselements (100) ausgehenden Ausnehmung versehen ist,
**dadurch gekennzeichnet, dass**
das Austragungs- und Verschlusselement (100) weiter einen an die zylinderförmige Mantelfläche des Austragungsbereichs (102) angeformten und der Zuleitung der Substanz zur Austrittsöffnung (107) dienenden Zufuhrkörper (103) aufweist,
und dass sich die Ausnehmung über den Austragungsbereich (102) und den angeformten Zufuhrkörper (103) erstreckt, und dabei eine stetig verlaufende Austragungsfläche (104) bildet,
wobei die Austragungsfläche (104) ein Teil einer Mantelfläche einer Ausnehmung mit einer zylindrischen Grundform bildet, wobei die Mittellängsachse dieser zylindrischen Grundform die Austragungsrichtung (A_{R}) des Austragungs- und Verschlusselements (100) definiert in welcher die pulver- oder pastenförmige Substanzen das Austragungs- und Verschlusselement (100) im Betrieb bei Austragung verlässt, und
wobei der Zufuhrkörper (103) von der Mittellängsachse (115') des Austragungs- und Verschlusselements (100) in Richtung der Austragungsrichtung (A_{R}) oder in umgekehrter Weiterführung der Austragungsrichtung (A_{R}) angeordnet ist.

2. Dosiereinrichtung nach Anspruch 1 **dadurch gekennzeichnet, dass** die Austragungsrichtung (A_{R}) und die vom Verschlusselement (100) gebildete Stirnfläche (105) des Austragungs- und Verschlusselements (100) einen spitzen Winkel (α) von > 0° bis 45° einschliessen.

3. Dosiereinrichtung nach Anspruch 2 **dadurch gekennzeichnet, dass** der spitze Winkel (α) in einem Bereich zwischen 15 und 25° liegt.

4. Dosiereinrichtung nach einem der Ansprüche 1 bis 3 **dadurch gekennzeichnet, dass** die Austragungsfläche (104) konkav gekrümmt ausgeformt ist.

5. Dosiereinrichtung nach einem der Ansprüche 1 bis 4 **dadurch gekennzeichnet, dass** die Austragungsfläche (104) in zwei Richtungen konkav gekrümmt ausgeformt ist, wobei in der zweiten Richtung eine zweite Ausnehmung ein Teil einer Mantelfläche einer zweiten zylindrischen Grundform bildet, und wobei die Mittellängsachse dieser zweiten zylindrischen Grundform einen stumpfen Winkel (β) mit der Mittellängsachse (115') des Austragungs- und Verschlusselements (100) einschliesst.

6. Dosiereinrichtung nach Anspruch 5 **dadurch gekennzeichnet, dass** der stumpfe Winkel (β) in einem Bereich zwischen 90° und 135° liegt.

7. Dosiereinrichtung nach einem der Ansprüche 1 bis 6 **dadurch gekennzeichnet, dass** der integrierte Zufuhrkörper (103) im eingebauten Zustand in einem Dosierkopf (1) in Beförderungsrichtung der pulver- oder pastenförmigen Substanz vor der Austrittsöffnung (107) eines Trichterelements (106) des Dosierkopfs (1) angeordnet ist.

8. Dosiereinrichtung nach Anspruch 7 **dadurch gekennzeichnet, dass** der integrierte Zufuhrkörper (103) eine Randkontur (108) aufweist, die der Innenkontur des Trichterelements (106) folgt.

9. Dosiereinrichtung nach einem der Ansprüche 7 oder 8 **dadurch gekennzeichnet, dass** der integrierte Zufuhrkörper (103) im Betriebszustand der Dosiereinrichtung bei vollständig ausgefahrenem Austragungs- und Verschlusselement (100) entlang seiner Mantelkontur (108) im Wesentlichen stets in losem Kontakt mit der Innenkontur des Trichterelements (106) ist.

10. Dosiereinrichtung nach einem der Ansprüche 7 oder 8 **dadurch gekennzeichnet, dass** der integrierte Zufuhrkörper (103) im Betriebszustand der Dosiereinrichtung bei vollständig ausgefahrenem Austragungs- und Verschlusselement (100) entlang seiner Mantelkontur (108) mit einem dazwischenliegenden Spalt von der Innenkontur des Trichterelements (106) beabstandet ist.

11. Dosiereinrichtung nach einem der Ansprüche 8 bis 10 **dadurch gekennzeichnet, dass** die Innenkontur des Trichterelements (106) trichterförmig mit zylindrischem Zwischenabschnitt (108) ausgebildet ist.

12. Dosiereinrichtung nach einem der Ansprüche 1 bis 11 **dadurch gekennzeichnet, dass** der Schaftbereich (114) einen kleineren Durchmesser als der Austragungsbereich (102) aufweist, und der Austragungsbereich (102) einen kleineren Durchmesser als das Verschlusselement (101) aufweist.

## Claims

1. A metering device for powdery or pasty substances with a withdrawal vessel and a metering head (1) connected or connectable thereto, which head has a housing with an outlet opening (7, 107) provided with a circular cross-section and a discharge and closure member (100), wherein the outlet opening (7, 107) and the discharge and closure member (100) are arranged on a central longitudinal axis (15) of the metering head (1), and wherein the discharge and closure member (100) is rotatable relative to the housing about the central longitudinal axis (15) of the metering head (1) and is designed to be translationally displaceable along the central longitudinal axis (15) of the metering head (1) with respect to the housing,
wherein the discharge and closure member (100)
- is cylindrical in its basic shape,
- has a closure region (101) serving to close an outlet opening (107),
- has a discharge region (102) arranged adjacent to the closure region (101) and serving to discharge substance to be metered and forming a cylindrical outer surface, and
- has a shaft region (114) arranged adjacent to the discharge region (102), and wherein the closure region (101) is arranged below the discharge region (102) in the operational state and forms an end face (105) at the lower end of the discharge and closure member (100), and
wherein the discharge region (102) is provided with a recess extending from the shell of the basic cylindrical shape of the discharge and closure member (100),
**characterized in that**
the discharge and closure member (100) further comprises a supply body (103) integrally formed on the cylindrical outer surface of the discharge region (102) and serving to supply the substance to the outlet opening (107), and **in that** the recess extends over the discharge region (102) and the integrally formed supply body (103), thereby forming a continuously extending discharge surface (104),
wherein the discharge surface (104) forms part of a circumferential surface of a recess with a cylindrical basic shape, wherein the central longitudinal axis of said cylindrical basic shape defines the discharge direction (A_{R}) of the discharge and closure member (100) in which the powdery or pasty substances leave the discharge and closure member (100) in operation during discharge, and
wherein the supply body (103) is arranged from the central longitudinal axis (115') of the discharge and closure member (100) in the discharge direction (A_{R}) or in reverse continuation of the discharge direction (A_{R}).

2. The metering device according to claim 1, **characterized in that** the discharge direction (A_{R}) and the end face (105) of the discharge and closure member (100) formed by the closure member (100) enclose an acute angle (α) of > 0° to 45° .

3. The metering device according to claim 2, **characterized in that** the acute angle (*α*) is in a range between 15 and 25° .

4. The metering device according to any one of claims 1 to 3, **characterized in that** the discharge surface (104) is concavely curved.

5. The metering device according to any one of claims 1 to 4, **characterized in that** the discharge surface (104) is concavely curved in two directions, wherein a second recess forms part of a lateral surface of a second cylindrical base shape in the second direction, and wherein the central longitudinal axis of said second cylindrical base shape encloses an obtuse angle (*β*) with the central longitudinal axis (115') of the discharge and closure member (100).

6. The metering device according to claim 5, **characterized in that** the obtuse angle (*β*) is in a range between 90° and 135° .

7. The metering device according to any one of claims 1 to 6, **characterized in that** the integrated supply body (103) is arranged in its installed state in a metering head (1) in front of the outlet opening (107) of a funnel member (106) of the metering head (1) in the conveying direction of the powdery or pasty substance.

8. The metering device according to claim 7, **characterized in that** the integrated supply body (103) has an edge contour (108) that follows the inner contour of the funnel member (106).

9. The metering device according to any one of claims 7 to 8, **characterized in that** the integrated supply body (103) is substantially always in loose contact with the inner contour of the funnel member (106) along its circumferential contour in the operating state of the metering device when the discharge and closure member (100) is fully extended.

10. The metering device according to any one of claims 7 or 8, **characterized in that** the integrated supply body (103) is spaced from the inner contour of the funnel member (106) along its circumferential contour (108) with an intervening gap in the operating state of the metering device when the discharge and closure member (100) is fully extended.

11. The metering device according to any one of claims 8 to 10, **characterized in that** the inner contour of the funnel member (106) is funnel-shaped with a cylindrical intermediate section (108).

12. The metering device according to any one of claims 1 to 11, **characterized in that** the shaft region (114) has a smaller diameter than the discharge region (102), and the discharge region (102) has a smaller diameter than the closure member (101).

## Revendications

1. Dispositif de dosage pour substances pulvérulentes ou pâteuses comportant un réservoir de prélèvement et une tête de dosage (1) reliée ou pouvant être reliée à celuici, et présentant un boîtier avec une ouverture de sortie (7, 107) à section circulaire et un élément de décharge et de fermeture (100), dans lequel l'ouverture de sortie (7, 107) et l'élément de décharge et de fermeture (100) sont disposés sur un axe longitudinal central (15) de la tête de dosage (1), et dans lequel l'élément de décharge et de fermeture (100) est conçu pour être rotatif par rapport au boîtier autour de l'axe longitudinal central (15) de la tête de dosage (1) et déplaçable en translation le long de l'axe longitudinal central (15) de la tête de dosage (1) par rapport au boîtier,
dans lequel l'élément de décharge et de fermeture (100)
- est cylindrique dans sa forme de base,
- présente une zone de fermeture (101) servant à fermer une ouverture de sortie (107),
- présente une zone de décharge (102) qui est disposée à côté de la zone de fermeture (101), sert à décharger la substance à doser et forme une surface d'enveloppe cylindrique, et
- présente une zone d'arbre (114) disposée à côté de la zone de décharge (102), et dans lequel la zone de fermeture (101) est disposée sous la zone de décharge (102) dans l'état opérationnel et forme une surface frontale (105) à l'extrémité inférieure de l'élément de décharge et de fermeture (100), et
dans lequel la zone de décharge (102) est pourvue d'un évidement partant de l'enveloppe de la forme de base cylindrique de l'élément de décharge et de fermeture (100),
**caractérisé en ce que**
l'élément de décharge et de fermeture (100) présente en outre un corps d'alimentation (103) qui est formé sur la surface d'enveloppe cylindrique de la zone de décharge (102) et sert à amener la substance à l'ouverture de sortie (107),
et **en ce que** l'évidement s'étend sur la zone de décharge (102) et le corps d'alimentation formé (103), formant ainsi une surface de décharge s'étendant de manière continue (104),
dans lequel la surface de décharge (104) fait partie d'une surface d'enveloppe d'un évidement de forme de base cylindrique, dans lequel l'axe longitudinal central de cette forme de base cylindrique définit la direction de décharge (A_{R}) de l'élément de décharge et de fermeture (100) dans laquelle les substances pulvérulentes ou pâteuses quittent l'élément de décharge et de fermeture (100) pendant le fonctionnement lors de la décharge,
et dans lequel le corps d'alimentation (103) est disposé à partir de l'axe longitudinal central (115') de l'élément de décharge et de fermeture (100) dans la direction de décharge (A_{R}) ou dans le prolongement inverse de la direction de décharge (A_{R}).

2. Dispositif de dosage selon la revendication 1, **caractérisé en ce que** la direction de décharge (A_{R}) et la surface frontale (105) de l'élément de décharge et de fermeture (100) formé par l'élément de fermeture (100) forment un angle aigu (α) de > 0° à 45° .

3. Dispositif de dosage selon la revendication 2, **caractérisé en ce que** l'angle aigu (α) se situe dans une plage comprise entre 15 et 25° .

4. Dispositif de dosage selon l'une des revendications 1 à 3, **caractérisé en ce que** la surface de décharge (104) est incurvée de manière concave.

5. Dispositif de dosage selon l'une des revendications 1 à 4, **caractérisé en ce que** la surface de décharge (104) est incurvée de manière concave dans deux directions, dans lequel un second évidement fait partie d'une surface d'enveloppe d'une seconde forme de base cylindrique dans la seconde direction, et dans lequel l'axe longitudinal central de cette seconde forme de base cylindrique forme un angle obtus (*β*) avec l'axe longitudinal central (115') de l'élément de décharge et de fermeture (100).

6. Dispositif de dosage selon la revendication 5, **caractérisé en ce que** l'angle obtus (*β*) se situe dans une plage comprise entre 90 et 135° .

7. Dispositif de dosage selon l'une des revendications 1 à 6, **caractérisé en ce que** le corps d'alimentation intégré (103) lorsqu'il est installé dans une tête de dosage (1) est disposé devant l'ouverture de sortie (107) d'un élément d'entonnoir (106) de la tête de dosage (1) dans la direction de transport de la substance pulvérulente ou pâteuse.

8. Dispositif de dosage selon la revendication 7, **caractérisé en ce que** le corps d'alimentation intégré (103) présente un contour de bord (108) qui suit le contour intérieur de l'élément d'entonnoir (106).

9. Dispositif de dosage selon l'une des revendications 7 ou 8, **caractérisé en ce que** le corps d'alimentation intégré (103) est toujours sensiblement en contact lâche le long de son contour d'enveloppe (108) avec le contour intérieur de l'élément d'entonnoir (106) à l'état de fonctionnement du dispositif de dosage lorsque l'élément de décharge et de fermeture (100) est complètement sorti.

10. Dispositif de dosage selon l'une des revendications 7 ou 8, **caractérisé en ce que** le corps d'alimentation intégré (103) est espacé le long de son contour d'enveloppe (108) par un espace intermédiaire du contour intérieur de l'élément d'entonnoir (106) à l'état de fonctionnement du dispositif de dosage lorsque l'élément de décharge et de fermeture (100) est complètement sorti.

11. Dispositif de dosage selon l'une des revendications 8 à 10, **caractérisé en ce que** le contour intérieur de l'élément d'entonnoir (106) est en forme d'entonnoir avec une section intermédiaire cylindrique (108).

12. Dispositif de dosage selon l'une des revendications 1 à 11, **caractérisé en ce que** la zone d'arbre (114) a un diamètre plus petit que la zone de décharge (102), et la zone de décharge (102) a un diamètre plus petit que l'élément de fermeture (101).
